Europäisches Patentamt

European Patent Office

Office européen des brevets

(11) Veröffentlichungsnummer: **0 282 694 B1**

(12) **EUROPÄISCHE PATENTSCHRIFT**

(45) Veröffentlichungstag der Patentschrift: **22.01.92**

(21) Anmeldenummer: **88100703.3**

(22) Anmeldetag: **20.01.88**

(51) Int. Cl.⁵: **G11B 33/02**, B65D 43/20

(54) **Behälter für Magnetbandkassetten.**

(30) Priorität: **14.03.87 DE 3708356**

(43) Veröffentlichungstag der Anmeldung:
**21.09.88 Patentblatt 88/38**

(45) Bekanntmachung des Hinweises auf die
Patenterteilung:
**22.01.92 Patentblatt 92/04**

(84) Benannte Vertragsstaaten:
**AT BE CH FR GB IT LI NL SE**

(56) Entgegenhaltungen:
**EP-A- 0 163 221**
**WO-A-86/01930**

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Artur, Prof. Dr. h. c.
Weinhalde 34
W-7244 Waldachtal 3/Tumlingen(DE)**
Erfinder: **Ziegler, Manfred
Obere Wiesenstrasse 1
W-7295 Dornstetten(DE)**
Erfinder: **Körner, Edmund
Im Martinskirchle
W-7244 Waldachtal 3/Tumlingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Behälter für Magnetbandkassetten oder dgl. Informationsträger gemäß der Gattung des Hauptanspruchs.

Bei bekannten Behältern für Magnetbandkassetten (z.B. in EP-A-0 163 221) wird der Schieber, der die Magnetbandkassette aufnimmt mittels einer Schraubenfeder in die Öffnungsposition verschoben. Die Schraubenfeder ist zu diesem Zweck zwischen der inneren Rückwand des Gehäuses und der Rückwand des Schiebers angeordnet. Damit die Schraubenfeder beim Einschieben des Schiebers nicht seitlich ausweicht, ist es erforderlich, daß die Schraubenfeder seitlich geführt wird. Dies hat zur Folge, daß beim Betätigen des Schiebers starke Federgeräusche auftreten, die aufgrund der Reibung zwischen den Federwindungen und den angrenzenden Führungsflächen entstehen.

Die Verwendung von Schraubenfedern ist insbesondere in Verbindung mit solchen Schiebern problematisch, die einen großen Schieberweg zwischen eingeschobenem Zustand und der Öffnungsposition zurücklegen. Bei großem Schieberweg ergeben sich zwangsläufig hohe Differenzen in der Federspannung, wobei die Federspannung auch in der Öffnungsposition noch so stark sein muß, daß eine auf dem Schieber gelagerte Magnetbandkassette gegen ihr Eigengewicht sicher in der Öffnungsposition gehalten werden kann. Dies hat zur Folge, daß die Schraubenfeder in der eingeschobenen Stellung des Schiebers entsprechend stark vorgespannt ist, wodurch bei unvorsichtigem Entriegeln des Schiebers dieser in unerwünschter Weise aus dem Gehäuse herauskatapultiert wird.

Der Erfindung liegt die Aufgabe zugrunde, einen Behälter für Magnetbandkassetten oder dgl. zu schaffen, bei dem das Federelement auf den Schieber, unabhängig von der Schieberposition eine möglichst gleichmäßige Federkraft ausübt.

Die Lösung dieser Aufgabe wird bei einem Behälter der eingangs genannten Gattung durch die im Kennzeichen des Hauptanspruchs angegebenen Merkmale erhalten.

Durch die Verwendung eines sich selbst aufrollenden Federbandes, welches mit der Federrolle am Schieber angreift, ergibt sich über den gesamten Schieberweg eine nahezu konstante Federkraft, die von der Federrolle auf den Schieber ausgeübt wird. Das Federband wird im vorderen Bereich im Gehäuse am Gehäuseboden befestigt und verläuft in Schieberichtung. Das Federband und damit auch die Federrolle können eine ausreichende Breite besitzen, so daß keine zusätzlichen Führungselemente für das Federband bzw. die Federrolle erforderlich sind. Durch das erfindungsgemäße Federelement erhält man für den Schieber eine nahezu geräuschlose und eine sehr gleichmäßige Schieberbewegung.

Es besteht grundsätzlich auch die Möglichkeit, in umgekehrter Weise ein freies Ende des Federbandes am Schieber zu befestigen und die Federrolle ortsfest im Gehäuse zu lagern. Bei der bevorzugten Ausführungsform wird jedoch das freie Ende des Federbandes am Gehäuse befestigt, so daß die Federrolle sich beim Aufrollen entlang der Schieberichtung bewegt.

Insbesondere bei Verwendung eines schmalen Federbandes können seitliche Führungselemente vorgesehen sein, die das Federband bzw. die vom Federband gebildete Federrolle seitlich führen. Derartige Führungen können am Gehäuse oder auch am Schieber ausgebildet sein.

Das Federband kann gemäß einer Weiterbildung der Erfindung im Befestigungsbereich in seiner Breite verringert sein, so daß in diesem Bereich ein Aufrollen aufgrund der Federspannung vermieden wird.

Der maximale Durchmesser der Federrolle ist vorzugsweise kleiner als die zur Aufnahme einer Magnetbandkassette erforderliche Innenhöhe des Gehäuses. Dies hat den Vorteil, daß nicht nur die Gehäusehöhe, wie sie bei herkömmlichen Behältern dieser Art vorgegeben ist, nicht verändert werden muß, sondern hat weiterhin den Vorteil, daß die am Ende des Schiebers gelagerte Federrolle auch im Hinblick auf die Einbautiefe nur sehr wenig Platz in Anspruch nimmt.

Die Erfindung wird nachfolgend anhand der Zeichnung näher erläutert.

Es zeigen:

Figur 1    einen Querschnitt entlang der Linie C-D des in Figur 2 dargestellten Behälters,

Figur 2    den in Figur 1 dargestellten Behälter im Längsschnitt,

Figur 3    den Schnitt entlang der Linie A-B des in Figur 1 dargestellten Behälters.

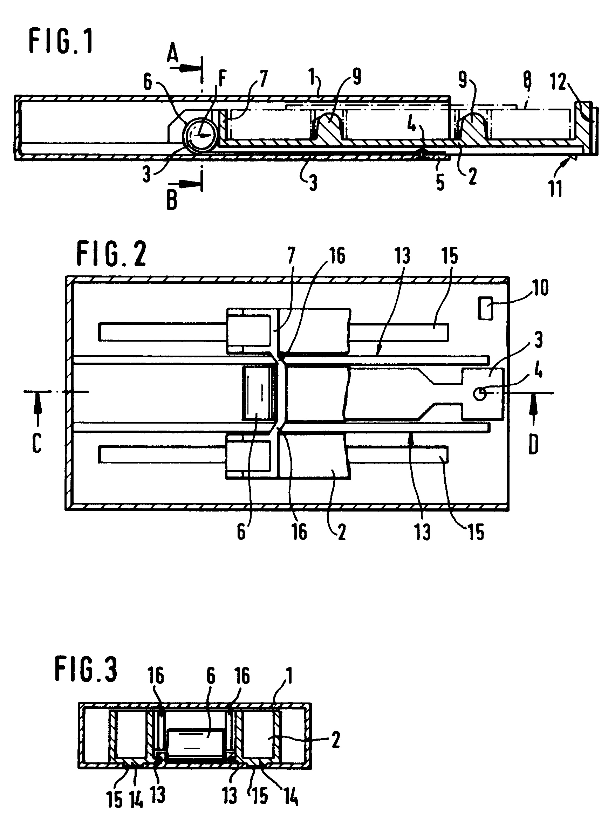

Der in Figur 1 dargestellte Behälter für Magnetbandkassetten besteht aus einem Gehäuse 1, einem Schieber 2 und einem Federband 3. Das Federband 3 ist an seinem freien Ende im Gehäuse 1 mittels einer Niete 4 am Gehäuseboden 5 befestigt. Am anderen Ende des Federbandes 3 bildet dieses eine Federrolle 6, die mit der Federkraft F gegen die Rückwand 7 des Schiebers 2 drückt. Die Federrolle 6 und der Schieber 2 sind in der Zeichnung in einer Zwischenposition dargestellt, die zwischen vollständig eingeschobenem Schieber 2 und der Öffnungsposition liegt. Auf dem Schieber 2 kann eine Magnetbandkassette 8 aufliegen, die hier mit unterbrochenen Linien angedeutet ist. Am Schieber 2 angeformte Nocken 9 greifen dabei in die Naben der Magnetbandkassette 8 ein.

In Figur 2 ist der Schieber 2 nur teilweise dargestellt, so daß am Gehäuseboden 5 die Anbringung des Federbandes 3 sichtbar wird. Außerdem ist eine am Gehäuseboden 5 vorgesehene Aussparung 10 sichtbar, in die eine Sperre 11 (Figur 1) des Schiebers 2 im eingeschobenen Zustand eingreift. Die Sperre 11 kann durch Betätigung einer hier nicht näher dargestellten Taste 12 entriegelt werden.

Der Schieber 2 greift in am Gehäuseboden 5 verlaufende seitliche Nuten 13 ein. Außerdem besitzt er Rastnasen 14 (Figur 3), die in Aussparungen 15 eingreifen und die maximale Öffnungsposition bestimmen. Die Federrolle 6 befindet sich zwischen seitlichen Führungen 16, die an der Rückwand 7 angeformt sind.

Das Federband 3 besitzt eine Länge, die etwa dem 1,5fachen des maximalen Schieberweges entspricht, so daß auch bei vollständig eingeschobenem Schieber 2 die Federrolle 6 wenigstens von einer vollständigen Windung des Federbandes 3 gebildet wird. Dadurch ist stets gewährleistet, daß die erforderliche Federkraft F von der Federrolle 6 auf den Schieber 2 übertragen wird und ein problemloses Aufrollen des Federbandes 3 in Richtung Öffnungsposition erfolgen kann.

## Patentansprüche

1. Behälter für Magnetbandkassetten oder dgl. Informationsträger mit einem Gehäuse und einem Schieber, der von wenigstens einem Federelement nach Lösen einer Sperre in eine Öffnungsposition verschiebbar ist, **dadurch gekennzeichnet**, daß das Federelement ein sich selbst aufrollendes Federband (3) ist, das beim Aufrollen den Schieber (2) in die Öffnungsposition verschiebt.

2. Behälter nach Anspruch 1, **dadurch gekennzeichnet**, daß das Federband (3) mit einem Ende im Bereich der Öffnung des Behälters (1) an diesem befestigt ist und mit seiner beim Aufrollen entstehenden Federrolle (6) am Schieber (2) anliegt.

3. Behälter nach Anspruch 2, **dadurch gekennzeichnet**, daß die Federrolle (6) an der Rückwand (7) des Schiebers (2) anliegt.

4. Behälter nach Anspruch 3, **dadurch gekennzeichnet**, daß der Schieber (2) eine Seitenführung (16) für die Federrolle (6) hat.

5. Behälter nach einem der vorhergehenden Ansprüche, **dadurch gekennzeichnet**, daß das Federband (3) in einer am Gehäuse (1) ausgebildeten Führung verläuft.

6. Behälter nach einem der vorhergehenden Ansprüche, **dadurch gekennzeichnet**, daß das Federband (3) im Befestigungsbereich in seiner Breite verringert ist.

7. Behälter nach einem der vorhergehenden Ansprüche, **dadurch gekennzeichnet**, daß der maximale Durchmesser der Federrolle (6) kleiner ist als die Innenhöhe des Gehäuses (1).

## Claims

1. Container for magnetic tape cassettes or similar information media, having a housing and a slider member which, after release of a catch, is displaceable by at least one spring element into an opening position, characterized in that the spring element is a spring band (3) that rolls up automatically and displaces the slider member (2) into the opening position as it rolls up.

2. Container according to claim 1, characterized in that the spring band (3) is fastened at one end to the container in the region of the opening of the container (1) and engages the slider member (2) with the spring coil (6) produced when it rolls up.

3. Container according to claim 2, characterized in that the spring coil (6) engages the rear wall (7) of the slider member (2).

4. Container according to claim 3, characterized in that the slider member (2) has a lateral guide means (16) for the spring coil (6).

5. Container according to one of the preceding claims, characterized in that the spring band (3) runs in a guide means formed on the housing (1).

6. Container according to one of the preceding claims, characterized in that the spring band (3) is reduced in width in the fastening region.

7. Container according to one of the preceding claims, characterized in that the maximum diameter of the spring coil (6) is smaller than the internal height of the housing (1).

## Revendications

1. Boîtier pour cassettes de bandes magnétiques ou pour des supports d'informations similaires, ce boîtier comportant un corps et un tiroir, qui peut être déplacé en position d'ouverture à l'aide d'au moins un élément formant ressort, après le déverrouillage d'un verrou, boîtier caractérisé en ce que l'élément formant ressort est une bande de ressort (3); qui s'enroule d'elle-même, et qui, lors de l'enroulement, déplace le tiroir (2) jusque dans la position d'ouverture.

2. Boîtier selon la revendication 1, caractérisé en ce que la bande de ressort (3) est fixée, par une extrémité, au boîtier dans la zone de l'ouverture de celui-ci et elle appuie sur le ressort (2) au moyen du rouleau de ressort (6) qui se forme lors de l'enroulement.

3. Boîtier selon la revendication 2, caractérisé en ce que le rouleau de ressort (6) s'appuie contre la paroi arrière (7) du tiroir (2).

4. Boîtier selon la revendication 3, caractérisé en ce que le tiroir (2) comporte un élément (16) de guidage latéral destiné au rouleau de ressort (6).

5. Boîtier selon l'une des revendications précédentes, caractérisé en ce que la bande de ressort (3) s'étend dans un élément de guidage formé sur le corps (1).

6. Boîtier selon l'une des revendications précédentes, caractérisé en ce que la bande de ressort (3) a une largeur réduite dans la zone de fixation.

7. Boîtier selon l'une des revendications précédentes, caractérisé en ce que le diamètre maximal du rouleau de ressort (6) est inférieur à la hauteur intérieure du corps (2)

FIG.1

FIG.2

FIG.3